# EUROPEAN PATENT SPECIFICATION

(11) **EP 2 851 278 B1**
(45) Date of publication and mention of the grant of the patent: **13.04.2016**
(21) Application number: 14184891.1
(22) Date of filing: 16.09.2014
(51) Int. Cl.: B62M 3/08, B62K 15/00

(54) **Pedal crank-pedal assembly**
Tretlagerkurbel-Fahrradpedal
Manivelle-Ensemble de pèdale

(30) Priority: 18.09.2013 IT MC20130054
(43) Date of publication of application: 25.03.2015
(73) Proprietor: Tecnometal Ornaments Societa' Unipersonale a Responsabilita' Limitata, 63833 Montegiorgio (FM) (IT)
(72) Inventor: Ricci, Enzo, 63833 MONTEGIORGIO (FM) (IT)
(74) Representative: Baldi, Claudio

(56) References cited:
- DE-A1- 2 200 990
- GB-A- 1 018 929

## Description

The present patent application for industrial invention relates to a pedal crank-pedal assembly as well as to connection means between a traditional pedal crank and a traditional pedal.

A folding bicycle is a very versatile means of transportation according to the most diverse user requirements. A folding bicycle is a perfect example of a means of intermodal transportation, where the term 'intermodality' indicates the possibility to combine the use of various means of transportation (bicycle - train, subway, bus, ferry-boat, etc.).

A folding bicycle is a perfect solution for commuters traveling by train to the city who need to take another means of transportation to reach their workplace. In such a case the folding bicycle can be conveniently placed under or between the train seats during the journey and carried just like a suitcase until the station exit or trailed along just like a trolley by means of the wheels.

A drawback of folding bicycles consists in the fact that pedals protrude orthogonally outwards from the pedal cranks, thus occupying a large transversal volume.

GB1,018,929 discloses a pedal connected to a pedal crank by means of a hinge with axis of rotation orthogonal to the axis of the pedal crank. The pedal rotates around the hinge point only by 90° wth respect to the pedal crank. In view of the above, when the bicycle is not used, the pedal is rotated around its hinge point and disposed in a minimum volume position, in front of the pedal crank, parallel to the pedal crank. However, in such a minimum volume position, the pedal causes a transversal volume with respect to the pedal crank, because the pedal protrudes outwards with respect to the pedal crank.

DE 2200990, corresponding to the preamble of claim 1, discloses a solution similar to GB1,018,929, wherein the pedal rotates around an axis orthogonal to the axis of the pedal crank. In such a case DE 22 00 990 also discloses an embodiment in which the pedal rotates by 180° with respect to the axis of the pedal crank. However, in this case, given that the axis of rotation is orthogonal to the axis of the pedal crank, the pedal must rotate under the edge of the pedal crank. In view of the above, when the pedal is in minimum volume position (under the edge of the pedal crank), the pedal-pedal crank assembly has an excessive longitudinal volume because the length of the pedal is added to the length of the pedal crank. Moreover, such a 180° rotation of the pedal with respect to the pedal crank is only possible when the hinge point is under the edge of the pedal crank. The above results in additional complexity of the device used to connect the pedal and the pedal crank. As a matter of fact, the connection device must rotate around a second axis of rotation orthogonal to the hinge point and to the axis of the pedal crank in order to position the hinge point under the edge of the crank.

The purpose of the present invention is to remedy the drawbacks of the prior art, as well as reduce the volume of a folding bicycle in folded position.

Another purpose of the present invention is to devise a pedal crank-pedal assembly, preferably for folding bicycles, adapted to be in operating position and idle position, wherein the volume of the pedal crank-pedal assembly is lower in idle position than in operating position.

Another purpose of the present invention is to devise means to connect a traditional pedal and a traditional pedal crank, which connects the pedal to the pedal crank in such manner to originate an innovative pedal crank-pedal assembly adapted to be in operating position and idle position; wherein the volume of the pedal crank-pedal assembly in idle position is lower in idle position than in operating position.

The pedal crank-pedal assembly of the present invention, as in claim 1, comprises a pedal crank, a pedal and connection means that revolvingly connect the pedal to the pedal crank.

The connections means of the pedal crank-pedal assembly comprise a hinge with a first element joined with the pedal crank, and a second element joined to the pedal.

The peculiarity of said pedal crank-pedal assembly consists in the fact that the axis of rotation of the hinge is parallel to the axis of the pedal crank in such manner that the pedal, after rotating around the hinge point, is brought behind the pedal crank without having to move the connection means.

The first element comprises a first side facing towards the pedal crank, and a second side facing towards the opposite side, whereas the second element comprises a first side facing towards the pedal and a second side facing towards the opposite side.

The first and second element of said hinge can have two positions:
- an operating position, wherein the two elements are side by side, with the second side of the first element in contact with the second side of the second element, and
- an idle position, wherein the two elements are spaced apart and the two second sides of the first and second element are tilted by 180°.

The connection means of the pedal crank-pedal assembly also comprise locking and unlocking means used to lock the first and second element of the hinge in operating position.

The locking and unlocking means can have two positions:
- a locking position, wherein the locking and unlocking means connect said first and second element that are retained in operating position, preventing them from being spaced apart freely;
- an unlocking position, wherein the locking and unlocking means do not connect said first and second element that can be spaced apart freely in order to be in idle position.

For explanatory reasons the description of the pedal crank-pedal assembly according to the present invention continues with reference to the attached drawings, which only have an illustrative, not limiting value, wherein:
- Fig. 1 is an exploded axonometric view of the components of the pedal crank-pedal assembly of the invention;
- Fig. 2 is an axonometric view of a pedal crank provided with the connection means of the invention, with the first and second element of the hinge in operating position and the cavallotto in locking position;
- Fig. 3 is basically the same as Fig. 2, except for the cavallotto in unlocking position;
- Fig. 4 is the same as Fig. 2, except for the first and second element of the hinge in idle position and the cavallotto in unlocking position;
- Fig. 5 shows the pedal crank of Fig. 4 from the opposite side;
- Figs. 6 and 7 are two perspective views of the connection means during the rotation of the hinge elements, wherein the hinge elements are tilted by 90° and 180°, respectively;
- Figs. 8, 9 and 10 are three perspective views of the pedal crank-pedal assembly, respectively closed in operating position, in intermediate position during opening and open in idle position.

Referring to the attached figures, the pedal crank-pedal assembly of the invention is disclosed, which is generally indicated with reference numeral (G).

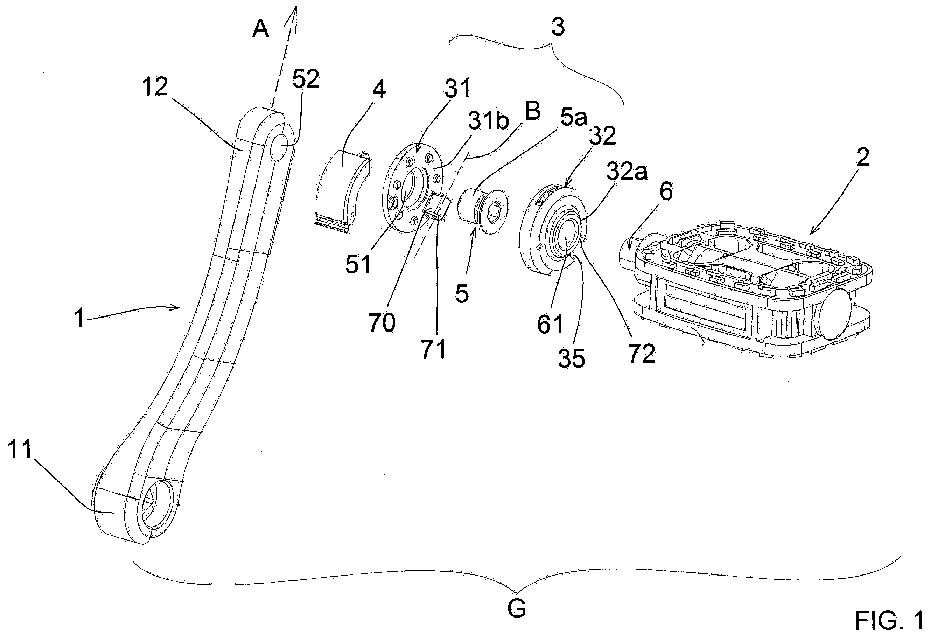

With reference to Fig. 1, the pedal crank-pedal assembly (G) comprises a pedal crank (1), a pedal (2) and connection means (3) that revolvingly connect the pedal (2) to the pedal crank (1).

The pedal crank (1) has an elongated shape. The pedal crank (1) comprises a first end (11) wherein the pedal crank (1) is adapted to be revolvingly connected to the frame of a bicycle. and a second end (12), wherein the pedal (2) is revolvingly connected to the pedal crank (1). The pedal crank (1) has a longitudinal axis (A) extending from the first end to the second end of the pedal crank.

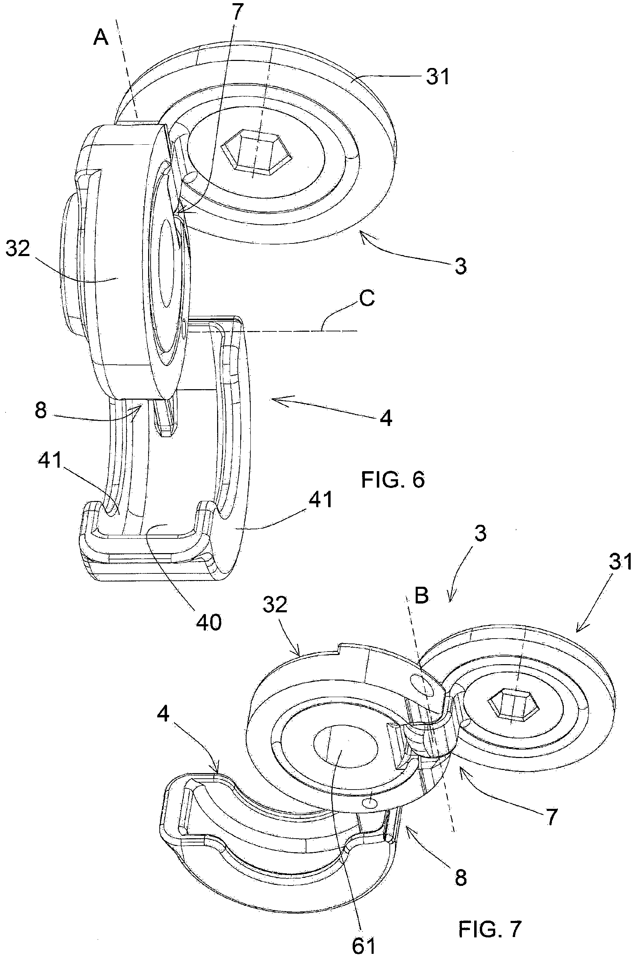

Referring to Fig. 7, the connection means (3) comprise a first element (31) and a second element (32) hinged by means of a hinge (7) with axis of rotation (B).

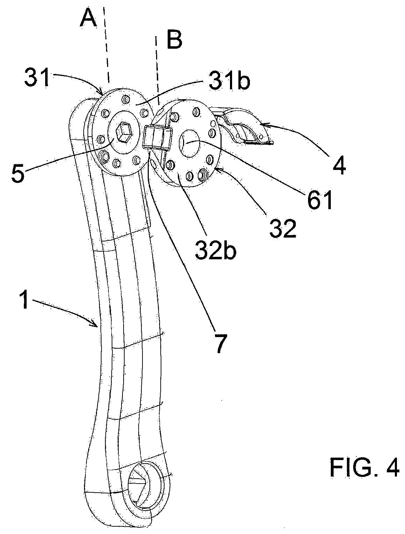

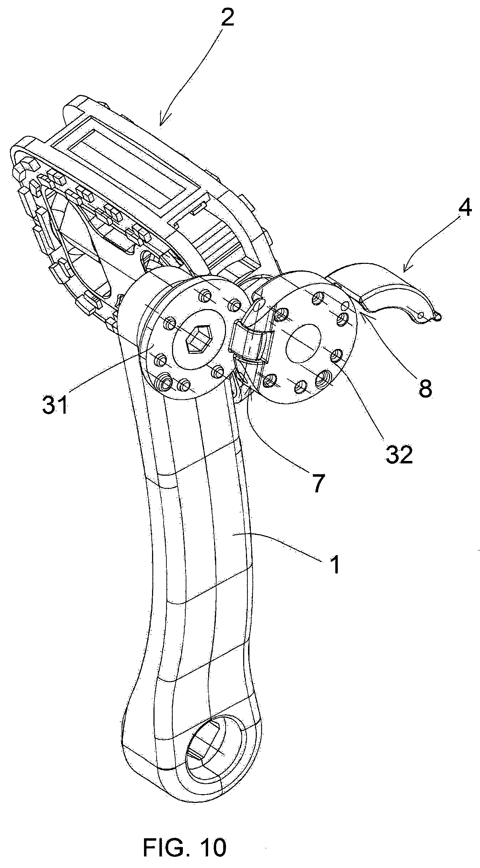

Referring to Fig. 4, the first element (31) is joined with the pedal crank (1) and the second element (32) is joined with the pedal (2). The axis of rotation (B) of the hinge (7) is parallel to the longitudinal axis (A) of the pedal crank. In view of the above the pedal (2) rotates around the axis of rotation (B) of the hinge by 180°. Therefore the pedal (2) rotates around a lateral edge of the pedal crank, is disposed at the side of the pedal crank (1) protruding inwards (as shown in Fig. 10) in a minimum volume position.

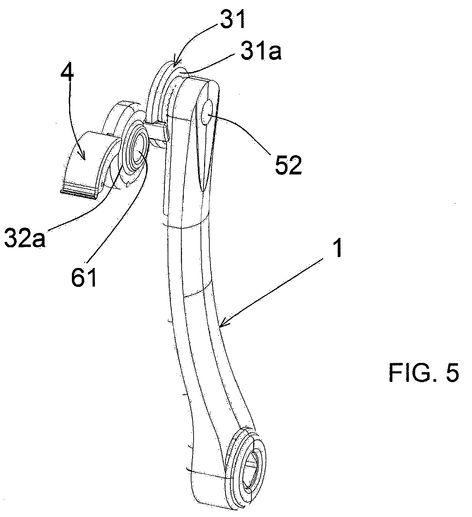

With reference to Figs. 1, 4 and 5, the first element (31) is shaped as a plate and comprises a first side (31 a) facing towards the pedal crank (1) and a second side (31 b) opposite to the first side. The second element (32) is shaped as a plate and comprises a first side (32a) facing towards the pedal (2) and a second side (32b) opposite to the first side.

The hinge (7) is disposed near to the lateral edges of said first and second element (31, 32). In view of the above, the axis of rotation (B) of the hinge is parallel to the surface of the second sides (31 b, 32b) of said first and second element (31, 32).

The hinge (7) comprises:
- a tang (70) protruding from the second side (31 b) of said first element (31), and
- a pin (72) protruding from the second element (32).

The tang (70) is provided with a hole (71) and the pin (72) is rotatably engaged in the hole (71) of the tang of the first element.

The tang (70) has a semicylindrical edge and the second element (32) comprises a seat (35) (as shown in Fig. 1) sliding with friction on the semicylindrical edge of the tang (70). The seat (35) of the second element has an abutment suitable to abut against said tang (70) in order to stop said second element (32) in idle position (as shown in Fig. 7).

Referring to Fig. 1, the first element (31) is shaped as a disc-like flange and is connected to the pedal crank (1) with screw fixing means (5). The screw fixing means (5) comprise a screw with a threaded stem (5a) that crosses a central hole (51) of the first element and is screwed into a threaded hole (52) obtained in the pedal crank (1) at the second end (12) of the pedal crank.

The second element (32) of the hinge (31, 32) is basically shaped as a disc-like flange and is connected to the pedal (2) with corresponding screw fixing means (6). The screw fixing means (6) used to connect the second element (32) to the pedal (2) comprise a threaded pin (6) joined to the pedal (2), which is screwed into a threaded hole (61) obtained in the second element (32).

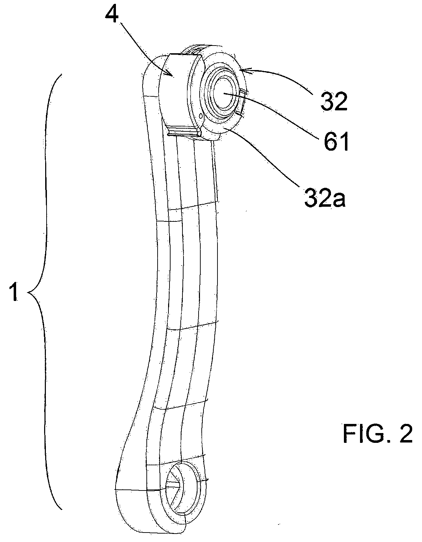

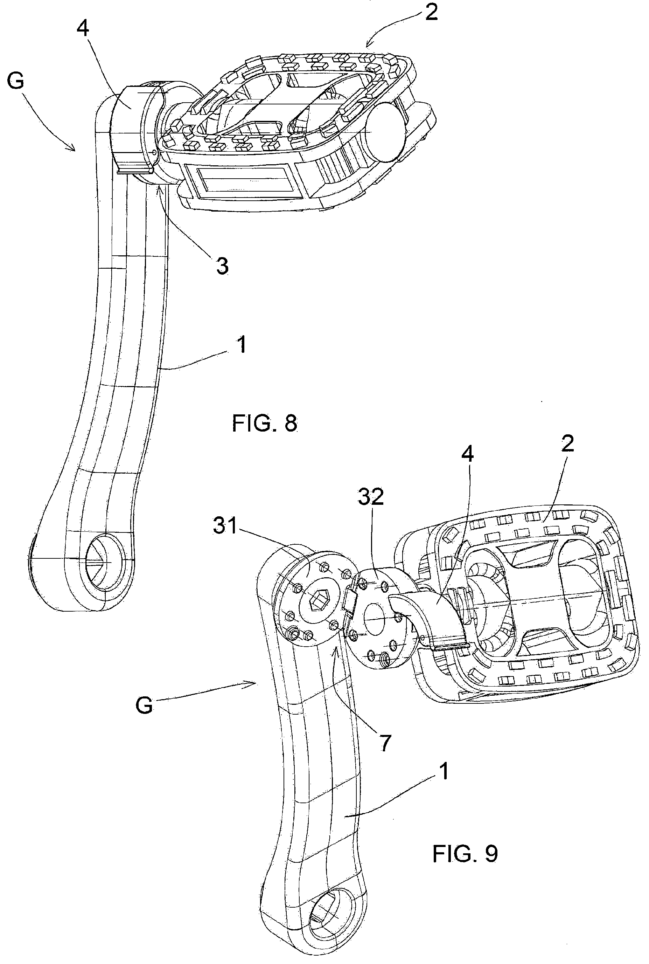

The first element (31) and the second element (32) of the connection means can have two positions:
- an operating position (shown in Figs. 2 and 8), wherein the first element (31) and the second element (32) are disposed side-by-side and the second side (31 b) of the first element (31) is in contact with the second side (32b) of the second element (32);
- an idle position (shown in Figs. 4, 5, 7 and 10), wherein the first element (31) and the second element (32) are spread apart and the two second sides (31 b, 32b) of the first element (31) and of the second element (32) are spaced apart and parallel, after a 180° rotation of the first element (31) with respect to the second element (32) around the axis (B) of the hinge (7).

Referring to Figs. 2, 3 and 4, the connection means (3) of the pedal crank-pedal assembly (G) also comprise locking and unlocking means (4) to lock the first element (31) and the second element (32) in operating position.

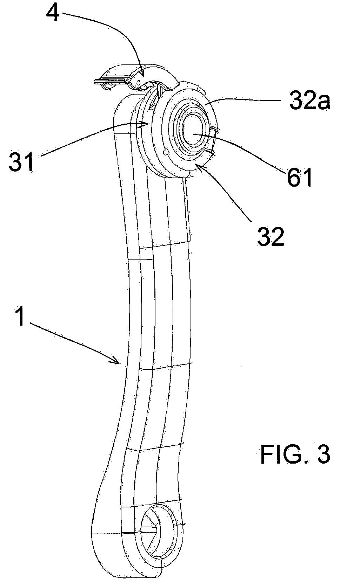

The locking and unlocking means (4) can have two positions:
- a locking position (shown in Figs. 2 and 8), wherein the locking and unlocking means (4) connect said first element (31) and second element (32) that are retained in operating position, preventing them from being spaced apart freely;
- an unlocking position (as shown in Figs. 3), wherein the locking and unlocking means (4) do not connect said first element (31) and second element (32) and the first element (31) and the second element (32) are spaced apart freely in order to be in idle position as shown in Figs. 4, 7 and 10.

Referring to Fig. 6, the locking and unlocking means (4) comprise a U-bolt (40) with a basically curved body. The U-bolt (40) has an overturned U-shaped cross-section in order to form lateral edges (41). The U-bolt can be hinged to the first element (31) or to the second element (32). The figures shows an embodiment wherein the U-bolt (4) is hinged to a peripheral edge of the second element (32) by means of a hinge (8) with axis of rotation (C) orthogonal to the surface of the first element (31) and therefore orthogonal to the axis of rotation (B) of the hinge (7) that connects the first element to the second element.

The U-bolt (40) can have two positions:
- a locking position, wherein the edges (41) of the U-bolt embrace at least partially the external edge of said first element (31) and second element (32), which are not free to spread apart and are retained by the U-bolt in operating position;
- an unlocking position, wherein the U-bolt (40) is spaced apart from the external edge of said first element (31) and second element (32), which are free to open wide apart in idle position.

## Claims

1. A pedal crank-pedal assembly (G) for bicycle comprising:
- a pedal crank (1) having a longitudinal axis (A),
- a pedal (2),
- connection means (3) that revolvingly connect the pedal (2) to the pedal crank (1); said connection means (3) comprising:
- a first element (31) joined with the pedal crank,
- a second element (32) joined with the pedal, and
- a hinge (7) with axis of rotation (B) to rotate the second element with respect to the first element, from an operating position wherein the pedal protrudes externally with respect to the pedal crank, to an idle position wherein the pedal protrudes inwardly with respect to the pedal crank, having a minimum volume,
- locking and unlocking means (4) connected to said connection means in order to lock said first and second elements in said operating position,
**characterized in that**
said axis of rotation (B) of the hinge (7) of the connection means is parallel to the longitudinal axis (A) of the pedal crank, and said second element (31) rotates by 180° around said axis of rotation (B) of the hinge, turning behind a lateral edge of the pedal crank (1).

2. The pedal crank-pedal assembly (G) of claim 1, wherein
said first and second elements (31, 31) are shaped as a plate,
said first element (31) comprising a first side (31 a) facing towards the pedal crank (1) and a second side (31 b) opposite to the first side; said second element (32) comprising a first side (32a) facing towards the pedal (2) and a second side (32b) opposite to the first side;
said hinge (7) is disposed near to the peripheral lateral edges of said first and second element (31, 32) and
said axis of rotation (B) of the hinge is parallel to the surface of the second sides (31 b, 32b) of said first and second element (31, 32).

3. The pedal crank-pedal assembly (G) of claim 2, wherein said hinge (7) comprises:
- a tang (70) protruding from the second side (31 b) of the first element, said tang (70) having a hole (71), and,
- a pin (71) protruding from the second element (32) and rotatably engaging into the hole (71) of the tang of the first element.

4. The pedal crank-pedal assembly (G) of claim 3, wherein said second element (32) comprises a seat (35) sliding with friction on said tang (70) of the first element, said seat (35) having an abutment suitable to abut against said tang (70) in order to stop said second element in idle position.

5. The pedal crank-pedal assembly (G) of any one of claims 2 to 4, wherein
said second sides (31 b, 32b) of said first and second element abut to each other, when said connection means (3) are in operating position; and
said second sides (31 b, 32b) of said first and second element are spaced apart, on parallel surfaces, when said connection means (3) are in idle position.

6. The pedal crank-pedal assembly (G) of any one of the preceding claims, wherein said locking and unlocking means (4) comprise a U-bolt (40) hinged to one of said first and second element in such manner that the U-bolt (40) can have two positions:
- a locking position, wherein the locking and unlocking means (4) connect said first (31) and second element (32), which are retained in operating position, not being free to open wide apart;
- an unlocking position, wherein the locking and unlocking means (4) do not connect said first (31) and second element (32), which are free to open wide apart in idle position.

7. The pedal crank-pedal assembly (G) of claim 6, wherein the U-bolt (40) is hinged to one of said first (31) and second element (32) by means of a hinge (8) having an axis of rotation (C) orthogonal to the axis of rotation (B) of the hinge (7) of the connection means.

8. The pedal crank-pedal assembly (G) of claim 6 or 7, wherein the U-bolt (40) has an overturned U-shaped cross-section to form two lateral edges (41) suitable to retain said first and second element (31, 32) in operating position.

9. The pedal crank-pedal assembly (G) of any one of the preceding claims, wherein said first (31) and second element (32) are connected respectively to the pedal crank (1) and to the pedal (2) by means of screw fixing means (5, 6).

10. The pedal crank-pedal assembly (G) of claim 9, wherein said first element (31) has a central through hole (51) and said screw fixing means (5) that connect the first element (31) to the pedal crank (1) comprise a screw with a threaded stem (5a) inserted into the central through hole (51) of the first element and screwed inside a threaded hole (52) of the pedal crank (1).

11. The pedal crank-pedal assembly (G) of claim 9 or 10, wherein said second element (32) has a threaded hole (61) and said screw fixing means (6) that connect the second element (32) to the pedal (2) comprise a threaded pin (6) joined to the pedal (2), which is engaged inside the threaded hole (61) of the second element (32).

12. Bicycle comprising a pedal crank - pedal assembly as in any one of the claims 1 to 11.

## Patentansprüche

1. Tretkurbel-Pedal-Anordnung (G) für Fahrräder, umfassend:
- eine Tretkurbel (1), welche eine Längsachse (A) hat,
- ein Pedal (2),
- Verbindungsmittel (3), welche das Pedal (2) drehbar mit der Tretkurbel (1) verbinden; wobei die Verbindungsmittel (3) Folgendes umfassen:
- ein erstes Element (31), welches fest mit der Tretkurbel (1) verbunden ist,
- ein zweites Element (32), welches fest mit dem Pedal verbunden ist; und
- ein Scharnier (7), welches eine Drehachse (B) hat, um das zweite Element bezogen auf das erste Element von einer Arbeitsstellung, in der das Pedal nach außen bezogen auf die Tretkurbel auskragt, in eine Ruhestellung zu drehen, in der das Pedal nach innen bezogen auf die Tretkurbel auskragt und dabei ein minimales Volumen hat,
- Sperr- und Entsperrmittel (4), die mit den Verbindungsmitteln verbunden sind, um das erste und das zweite Element in der Arbeitsstellung zu sperren,
**dadurch gekennzeichnet, dass**
die Drehachse (B) des Scharniers (7) der Verbindungsmittel parallel zur Längsachse (A) der Tretkurbel liegt und das zweite Element (31) eine Drehung um 180° um die Drehachse (B) des Scharniers ausführen kann, wobei es sich hinter eine Seitenkante der Tretkurbel (1) dreht.

2. Tretkurbel-Pedal-Anordnung (G) nach Anspruch 1, wobei das erste und das zweite Element (31, 32) plattenförmig sind,
das erste Element (31) eine erste Seite (31 a) umfasst, die der Tretkurbel (1) zugewandt ist, und eine zweite Seite (31 b), die der ersten Seite gegenüberliegt; wobei das zweite Element (32) eine erste Seite (32a) umfasst, die dem Pedal (2) zugewandt ist, und eine zweite Seite (32b), die der ersten Seite gegenüberliegt;
das Scharnier (7) in der Nähe der umlaufenden Seitenkanten des ersten und des zweiten Elements (31, 32) angeordnet ist; und
die Drehachse (B) des Scharniers parallel zur Fläche der zweiten Seiten (31 b, 32b) des ersten und des zweiten Elements (31, 32) liegt.

3. Tretkurbel-Pedal-Anordnung (G) nach Anspruch 2, wobei das Scharnier (7) Folgendes umfasst:
- einen Schaft (70), der aus der zweiten Seite (31 b) des ersten Elements (31) auskragt, wobei der Schaft (70) eine Bohrung (71) aufweist und
- einen Stift (72), der aus dem zweiten Element (32) auskragt und die Bohrung (71) im Schaft des ersten Elements drehbar in Eingriff nimmt.

4. Tretkurbel-Pedal-Anordnung (G) nach Anspruch 3, wobei das zweite Element (32) einen Sitz (35) umfasst, der unter Reibung auf dem Schaft (70) des ersten Elements gleitet; wobei der Sitz (35) eine Anschlagfläche aufweist, die dazu geeignet ist, gegen den Schaft (70) in Anschlag zu gehen, um das zweite Element in der Ruhestellung zu sperren.

5. Tretkurbel-Pedal-Anordnung (G) nach einem beliebigen der Ansprüche 2 bis 4, wobei
die zweiten Seiten (31 b, 32b) des ersten und des zweiten Elements aneinanderstoßen, wenn die Verbindungsmittel (3) sich in Arbeitsstellung befinden; und
die zweiten Seiten (31 b, 32b) des ersten und des zweiten Elements voneinander beanstandet auf parallelen Ebenen liegen, wenn die Verbindungsmittel (3) sich in Ruhestellung befinden.

6. Tretkurbel-Pedal-Anordnung (G) nach einem beliebigen der vorstehenden Ansprüche, wobei die Sperr- und Entsperrmittel (4) einen U-Bügel (40) umfassen, der an einem der ersten und zweiten Elemente derart angelenkt ist, dass der U-Bügel (40) zwei Stellungen einnehmen kann:
- eine Sperrstellung, in der die Sperr- und Entsperrmittel (4) das erste (31) und das zweite Element (32) miteinander verbinden, welche in der Arbeitsstellung gehalten werden, da sie nicht zum Öffnen freigegeben sind;
- eine Entsperrstellung, in der die Sperr- und Entsperrmittel (4) das erste (31) und das zweite Element (32) nicht miteinander verbinden, welche zum Öffnen freigegeben sind, um die Ruhestellung einzunehmen.

7. Tretkurbel-Pedal-Anordnung (G) nach Anspruch 6, wobei der U-Bügel (40) an einem der ersten (31) und zweiten Elemente (32) mittels eines Scharniers (8) angelenkt ist, welches eine Drehachse (C) aufweist, die rechtwinklig zur Drehachse (B) des Scharniers (7) der Verbindungsmittel steht.

8. Tretkurbel-Pedal-Anordnung (G) nach Anspruch 6 oder 7, wobei der U-Bügel (40) einen Querschnitt in Form eines umgedrehten "U" aufweist, um zwei Seitenkanten (41) zu definieren, die dazu geeignet sind, das erste und das zweite Element (31, 32) in Arbeitsstellung zu halten.

9. Tretkurbel-Pedal-Anordnung (G) nach einem beliebigen der vorstehenden Ansprüche, wobei das erste (31) und das zweite Element (32) mittels schraubbaren Befestigungsmitteln (5, 6) jeweils mit der Tretkurbel (1) und dem Pedal (2) verbunden sind.

10. Tretkurbel-Pedal-Anordnung (G) nach Anspruch 9, wobei das erste Element (31) ein mittleres Durchgangsloch (51) umfasst und die schraubbaren Befestigungsmittel (5), die das erste Element (31) mit der Tretkurbel (1) verbinden, eine Schraube umfassen, die einen Gewindezapfen (5a) aufweist, der durch das mittlere Durchgangsloch (51) des ersten Elements hindurchgeht und in eine Gewindebohrung (52) der Tretkurbel (1) eingeschraubt ist.

11. Tretkurbel-Pedal-Anordnung (G) nach Anspruch 9 oder 10, wobei das zweite Element (32) eine Gewindebohrung (61) umfasst und die schraubbaren Befestigungsmittel (6), die das zweite Element (32) mit dem Pedal (2) verbinden, einen Gewindestift (6) umfassen, der fest mit dem Pedal (2) verbunden ist, welches in der Gewindebohrung (61) des zweiten Elements (32) angelenkt ist.

12. Fahrrad umfassend eine Tretkurbel-Pedal-Anordnung (G) nach einem beliebigen der Ansprüche 1 bis 11.

## Revendications

1. Groupe manivelle-pédale (G) pour bicyclette comprenant :
- une manivelle (1) ayant un axe longitudinal (A),
- une pédale (2),
- des moyens de raccordement (3) qui relient en rotation la pédale (2) à la manivelle (1) ; lesdits moyens de raccordement (3) comprenant :
- un premier élément (31) solidaire à la manivelle (1),
- un second élément (32) solidaire à la pédale ; et
- une charnière (7) ayant un axe de rotation (B) pour la rotation du second élément par rapport au premier élément, à partir d'une position opérationnelle où la pédale déborde à l'extérieur par rapport à la manivelle, à une position de repos où la pédale déborde vers l'intérieur par rapport à la manivelle, en occupant ainsi un encombrement minime,
- des moyens de blocage et de déblocage (4) reliés aux dits moyens de raccordement pour bloquer lesdits premier et second éléments sur ladite position opérationnelle,
**caractérisé en ce que**
ledit axe de rotation (B) de la charnière (7) des moyens de raccordement est parallèle à l'axe longitudinal (A) de la manivelle et ledit second élément (31) peut effectuer une rotation de 180° autour du dit axe de rotation (B) de la charnière, en tournant derrière un bord latéral de la manivelle (1).

2. Groupe manivelle-pédale (G) selon la revendication 1, où
lesdits premier et second éléments (31, 32) ont la forme de plaques,
ledit premier élément (31) comprend une première face (31 a) tournée vers la manivelle (1) et une seconde face (31 b) opposée à la première face ; ledit second élément (32) comprend une première face (32a) tournée vers la pédale (2) et une seconde face (32b) opposée à la première face ;
ladite charnière (7) est disposée près des bords latéraux périphériques des dits premier et second éléments (31, 32) ; et
ledit axe de rotation (B) de la charnière est parallèle à la surface des dites secondes faces (31 b, 32b) des dits premier et second éléments (31, 32).

3. Groupe manivelle-pédale (G) selon la revendication 2, où ladite charnière (7) comprend :
- une base (70) qui déborde de la seconde face (31 b) du dit premier élément (31), ladite base (70) ayant un orifice (71), et
- un goujon (72) qui déborde du second élément (32) et s'engage en rotation dans l'orifice (71) de la base du premier élément.

4. Groupe manivelle-pédale (G) selon la revendication 3, où ledit second élément (32) comprend un logement (35) qui coulisse avec frottement sur ladite base (70) du premier élément ; ledit logement (35) ayant une surface de butée apte à entrer en butée contre ladite base (70) pour bloquer ledit second élément sur la position de repos.

5. Groupe manivelle-pédale (G) selon l'une quelconque des revendications de 2 à 4, où
lesdites secondes faces (31 b, 32b) des dits premier et second éléments sont en butée entre elles lorsque lesdits moyens de raccordement (3) sont en position opérationnelle ; et
lesdites secondes faces (31 b, 32b) des dits premier et second éléments sont écartées entre elles, sur des plans parallèles, lorsque lesdits moyens de raccordement (3) sont en position de repos.

6. Groupe manivelle-pédale (G) selon l'une quelconque des revendications précédentes, où lesdits moyens de blocage et de déblocage (4) comprennent un étrier (40) articulé sur l'un des dits premier et second éléments, de façon à ce que l'étrier (40) puisse assumer deux assiettes :
- une assiette de blocage, où lesdits moyens de blocage et de déblocage (4) relient lesdits premier (31) et second éléments (32), lesquels sont maintenus sur dite position opérationnelle car ils ne peuvent pas s'écarter librement ;
- une assiette de déblocage, où lesdits moyens de blocage et de déblocage (4) ne relient pas lesdits premier (31) et second éléments (32), qui peuvent ainsi s'écarter librement aux fins d'assumer ladite position de repos.

7. Groupe manivelle-pédale (G) selon la revendication 6, où ledit étrier (40) est articulé sur l'un des dits premier (31) et second (32) éléments moyennant une charnière (8) ayant un axe de rotation (C) orthogonal à l'axe de rotation (B) de ladite charnière (7) des moyens de raccordement.

8. Groupe manivelle-pédale (G) selon la revendication 6 ou 7, où ledit étrier (40) a une section transversale en forme de « U » renversé, de façon à définir deux bords latéraux (41) aptes à retenir lesdits premier et second éléments (31, 32) en position opérationnelle.

9. Groupe manivelle-pédale (G) selon l'une quelconque des revendications précédentes, où lesdits premier (31) et second éléments (32) sont reliés respectivement à la manivelle (1) et à la pédale (2) à l'aide de moyens de fixation à vis (5; 6).

10. Groupe manivelle-pédale (G) selon la revendication 9, où ledit premier élément (31) comprend un orifice passant central (51) et lesdits moyens de fixation à vis (5) qui relient le premier élément (31) à la manivelle (1), comprennent une vis présentant une tige filetée (5a) qui traverse l'orifice passant central (51) du premier élément et vissée dans un orifice fileté (52) de la manivelle (1).

11. Groupe manivelle-pédale (G) selon la revendication 9 ou 10, où ledit second élément (32) comprend un orifice fileté (61) et lesdits moyens de fixation à vis (6) qui relient le second élément (32) à la pédale (2) comprennent un goujon fileté (6), solidaire à la pédale (2) qui s'engage dans ledit orifice fileté (61) du second élément (32).

12. Bicyclette comprenant un groupe manivelle-pédale selon l'une quelconque des revendications de 1 à 11.
